# FASCICULE DE BREVET EUROPEEN

(11) **EP 3 488 311 B1**
(45) Date de publication et mention de la délivrance du brevet: **02.06.2021**
(21) Numéro de dépôt: 17751272.0
(22) Date de dépôt: 20.07.2017
(51) Int. Cl.: G05D 23/13

(54) **UNITÉ DE MÉLANGE ET ROBINET MITIGEUR COMPRENANT UNE TELLE UNITÉ DE MÉLANGE**
MISCHEINHEIT UND MISCHARMATUR MIT SOLCH EINER MISCHEINHEIT
MIXING UNIT AND MIXER TAP COMPRISING SUCH A MIXING UNIT

(30) Priorité: 21.07.2016 FR 1656965
(43) Date de publication de la demande: 29.05.2019
(73) Titulaire: Vernet, 91340 Ollainville (FR)
(72) Inventeur: FASSOLETTE, Pierre-Olivier, 91100 Corbeil Essonnes (FR); DRABER, Matthieu, 91490 Milly La Foret (FR)
(74) Mandataire: Lavoix
(86) Numéro de dépôt international: PCT/EP2017/068407
(87) Numéro de publication internationale: WO 2018/015509

(56) Documents cités:
- WO-A1-97/21949
- WO-A1-2005/124495
- US-A1- 2002 130 189
- US-A1- 2009 025 809

## Description

La présente invention concerne une unité de mélange et un robinet mitigeur comprenant une telle unité de mélange.

L'invention se rapporte au domaine de la robinetterie d'usage sanitaire. En particulier, les robinets dits « mitigeurs » permettent d'émettre un flux mitigé d'eau courante par mélange d'un flux d'eau chaude et d'un flux d'eau froide au sein d'une cartouche montée dans le corps du robinet. Le débit respectif des flux d'eau froide et d'eau chaude admis dans la cartouche peuvent être réglés à l'aide d'un levier de commande, afin de permettre un réglage de la température du flux mitigé par rotation du levier autour d'un axe, et du débit du flux mitigé par rotation de levier autour d'un deuxième axe.

La cartouche comprend dans la plupart des cas une paire de disques céramiques ajourés, l'un étant fixe, et l'autre étant mobile sous l'action du levier tout en étant en contact plan, glissant et étanche avec le disque fixe. En fonction de la position du disque mobile sur le disque fixe, des canaux sont formés pour permettre l'admission des flux d'eau froide et chaude au sein de la cartouche, avec un débit plus ou moins important, et ainsi entraîner leur mélange pour la formation du flux mitigé.

Certaines cartouches connues peuvent être dotées d'un boîtier additionnel séparé, et qui est rapporté contre la cartouche. Par exemple, le brevet FR-B-2 876 433 décrit une cartouche pour un robinet mitigeur équipée d'un boîtier thermostatique additionnel accouplé de manière étanche à la base de la cartouche. Le boîtier thermostatique additionnel est pourvu d'un élément thermostatique comprenant une coupelle, renfermant une cire thermodilatable actionnant un piston en translation en fonction de la température à laquelle la coupelle est soumise. Ainsi, lorsque la température du flux mitigé excède une valeur de seuil prédéterminée, un obturateur est actionné par le piston pour obturer le passage d'eau chaude avant son entrée dans la cartouche, afin de limiter automatiquement la température du flux mitigé. Ainsi, le flux mitigé est régulé en température, de façon à ne pas excéder la température de seuil prédéterminée.

Néanmoins, ce type de boîtier additionnel connu est susceptible d'entraîner une réduction du débit d'eau chaude, même lorsque l'obturateur est ouvert, alors que le débit d'eau froide n'est pas, ou peu, affecté par la présence du boîtier. En d'autres termes, ce boîtier additionnel connu est susceptible de déséquilibrer les débits des flux entrants l'un par rapport à l'autre.

Dans un autre domaine où les commandes de température et de débit sont disjointes, US 2002/130189 A1 décrit une cartouche thermostatique, dans laquelle une commande de débit actionne des disques pour régler le débit, et dans laquelle une commande de température actionne une valve par l'intermédiaire d'un actuateur thermostatique, pour régler la proportion d'eau froide et d'eau chaude.

Par conséquent, l'invention vise à apporter une alternative à l'art antérieur en proposant une nouvelle unité de mélange qui n'entraîne pas un déséquilibre du débit des flux entrants.

L'invention a pour objet une unité de mélange pour un robinet mitigeur, l'unité de mélange comprenant :
- une première entrée d'un premier flux entrant de fluide présentant une première température,
- une deuxième entrée d'un deuxième flux entrant de fluide présentant une deuxième température supérieure à la première température,
- des moyens de mélange du premier flux entrant avec le deuxième flux entrant pour former un flux sortant de fluide présentant une température de sortie,
- une sortie principale pour le flux sortant, et
- un actuateur thermosensible, comprenant :
   ∘ une première partie, qui est thermosensible et qui est disposée, au moins en partie, à la sortie principale, et
   ∘ une deuxième partie actionnée en translation par la première partie selon un axe d'obturation,

Selon l'invention, l'unité de mélange comprend un obturateur, qui est actionné par l'actuateur thermosensible, de façon à évoluer entre une position d'obturation, au moins partielle, de la sortie principale et une position d'ouverture de la sortie principale, en fonction de la position relative de la première partie et de la deuxième partie de l'actuateur thermosensible le long de l'axe d'obturation.

Grâce à l'invention, l'obturateur et au moins une partie de la première partie, thermosensible, sont situés à la sortie principale et ne créent ainsi pas de déséquilibre entre le débit du premier flux entrant et le débit du deuxième flux entrant.

Selon d'autres caractéristiques optionnelles et avantageuses de l'invention, prises seules ou en combinaison :
- L'unité de mélange comprend une butée arrière, la deuxième partie étant en appui contre la butée arrière selon une direction arrière le long de l'axe d'obturation, et l'obturateur est solidaire de la première partie, ou est formé au moins en partie par la première partie, la première partie étant mobile entre la position d'obturation et la position d'ouverture.
- L'unité de mélange comprend :
   ∘ une butée avant, contre laquelle l'obturateur arrive en butée dans une direction avant, opposée à la direction arrière, lorsque l'obturateur arrive en position d'obturation,
   ∘ un poussoir de surcourse, qui est mobile en translation le long de l'axe d'obturation entre une position normale et une position de surcourse située dans la direction arrière par rapport à la position normale, le poussoir de surcourse comprenant la butée arrière, et
   ∘ un élément auxiliaire de rappel élastique du poussoir de surcourse depuis la position de surcourse vers la position normale.
- Le poussoir de surcourse comprend des nervures externes axiales de guidage en translation du poussoir de surcourse le long de l'axe d'obturation, les nervures externes axiales ménageant entre elles des interstices de circulation du flux sortant le long du poussoir de surcourse.
- L'unité de mélange comprend un élément principal de rappel élastique de l'obturateur depuis la position d'obturation vers la position d'ouverture.
- Les moyens de mélange comprennent une chambre de mélange, au sein de laquelle débouchent la première entrée, la deuxième entrée et la sortie principale, et l'unité de mélange comprend un col d'obturation, qui est fluidiquement connecté à la sortie principale et qui est configuré pour être obturé par l'obturateur en position d'obturation, la première partie étant disposée dans une section de passage du col d'obturation.
- L'unité de mélange comprend une chambre de sortie, ou un logement de sortie, qui s'étend le long de l'axe d'obturation à partir du col d'obturation jusqu'à une sortie axiale de l'unité de mélange, et la chambre de sortie ou le logement de sortie comprend au moins une sortie radiale, laquelle est ménagée radialement par rapport à l'axe d'obturation, la sortie radiale s'étendant de préférence à partir du col d'obturation.
- L'unité de mélange comprend :
   ∘ la chambre de sortie,
   ∘ un premier conduit d'entrée, qui prolonge la première entrée, et
   ∘ un deuxième conduit d'entrée, qui prolonge la deuxième entrée, la chambre de sortie étant disposée entre le premier conduit d'entrée et le deuxième conduit d'entrée.
- L'unité de mélange comprend :
   ∘ une cartouche, qui inclut les moyens de mélange et qui comprend un côté inférieur, traversé par la première entrée, par la deuxième entrée et par la sortie principale, et
   ∘ un boîtier additionnel, qui renferme l'actuateur thermosensible, ainsi que l'obturateur, et qui comprend un côté supérieur par l'intermédiaire duquel le boîtier additionnel est rapporté contre le côté inférieur de la cartouche.
- L'actuateur thermosensible est un élément thermostatique, alors que la première partie comprend une coupelle renfermant un corps thermodilatable, et que la deuxième partie est un piston coulissant par rapport à la première partie selon l'axe d'obturation.
- L'actuateur thermosensible est réalisé, au moins en partie, en alliage à mémoire de forme, de façon à être thermodilatable selon l'axe d'obturation, alors que la deuxième partie de l'actuateur thermosensible est thermosensible et forme une pièce d'un seul tenant avec la première partie, et que la translation de la deuxième partie par rapport à la première partie est obtenue par déformation réversible de l'actuateur thermosensible.
- L'unité de mélange présente une forme générale cylindrique définissant un axe principal de l'unité de mélange, l'axe d'obturation s'étendant soit dans un plan sensiblement orthogonal à l'axe, soit parallèlement à l'axe.

L'invention a également pour objet un robinet mitigeur comprenant une unité de mélange conforme à ce qui précède.

L'invention sera mieux comprise à la lecture de la description qui va suivre, donnée uniquement à titre d'exemple non limitatif et faite en se référant aux dessins dans lesquels :
- la figure 1 est une coupe longitudinale d'un robinet mitigeur comprenant une unité de mélange conforme à l'invention ;
- les figures 2 et 3 sont des coupes longitudinales de l'unité de mélange de la figure 1 ;
- la figure 4 est une vue en perspective du dessous de l'unité de mélange des figures précédentes,
- la figure 5 est une vue en perspective du dessus d'un boîtier additionnel de l'unité de mélange des figures précédentes,
- les figures 6, 7 et 8 sont des coupes transversales du boîtier additionnel des figures précédentes selon un trait de coupe VI représenté sur la figure 1, le boîtier additionnel étant représenté dans trois configurations différentes, les traits de coupe I-I, II-II et III-III respectifs des figures 1, 2 et 3 étant représentés sur la figure 6,
   - la figure 9 est une vue en perspective de dessous d'une unité de mélange conforme à un deuxième mode de réalisation de l'invention,
   - les figures 10 à 12 sont des coupes partielles de la figure 9 selon un plan IX, représentant une partie de l'unité de mélange de la figure 9 selon trois configurations différentes, et
   - la figure 13 est une coupe similaire à la figure 6, pour un troisième mode de réalisation de l'invention.

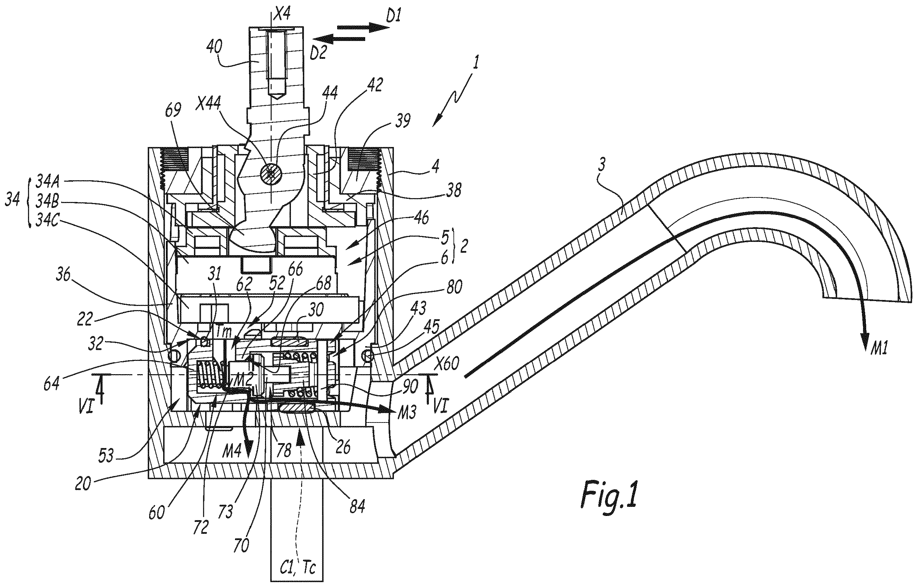

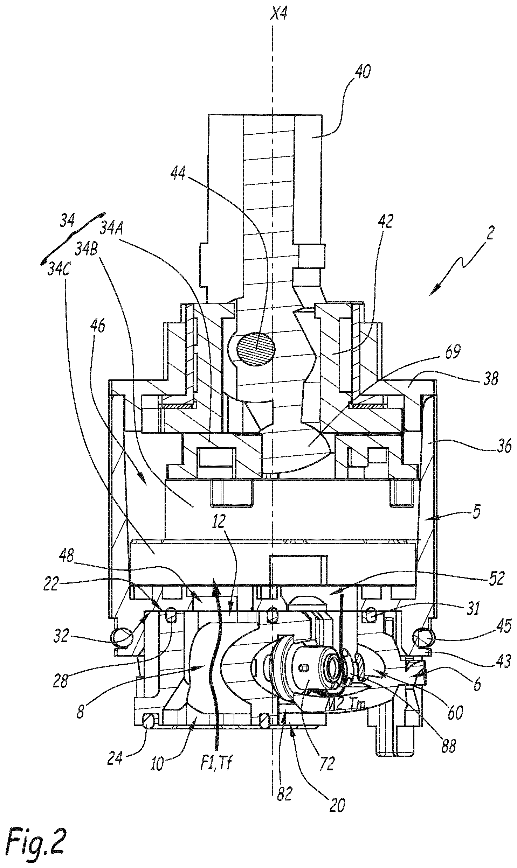

La figure 1 illustre un robinet mitigeur 1, selon le premier mode de réalisation, comprenant une unité de mélange 2 représentée seule sur les figures 2 à 4. L'unité de mélange 2 est insérée dans un corps 4 de ce robinet mitigeur 1. Le robinet 1 est préférentiellement conçu pour être installé sur un bac du genre évier ou douche, ou plus généralement au sein d'une installation sanitaire, non illustrée. Le corps 4 présente préférentiellement une forme générale cylindrique et creuse, s'étendant de façon coaxiale avec un axe X4, qui est avantageusement vertical lorsque le robinet 1 est monté sur le bac. Par commodité, la suite de la description est orientée par rapport à l'axe X4 de l'exemple illustré, en considérant que les termes « supérieur » et « haut » correspondent à une direction axiale par rapport à l'axe X4, tournée vers la partie haute de la figure 1, tandis que les termes « inférieur » et « bas » correspondent à une direction axiale de sens opposé. Alternativement, l'axe X4 est non vertical et est par exemple horizontal.

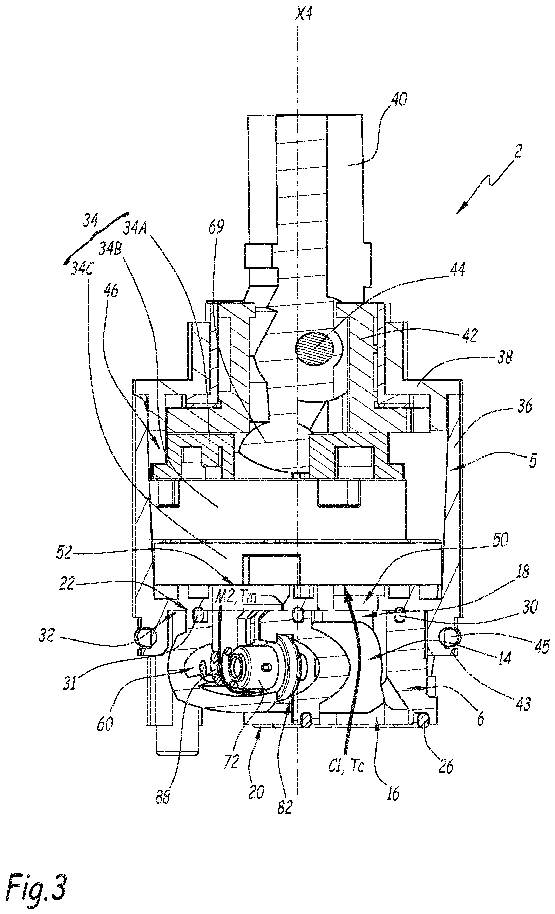

Sur commande d'un utilisateur, le robinet mitigeur 1 est conçu pour émettre, via un bec 3 faisant saillie radialement du corps 4 du robinet 1, un flux d'eau mitigé M1 présentant une température et un débit réglable par l'utilisateur. Le robinet 1 est alimenté axialement, en partie inférieure, par un premier flux entrant d'eau F1, comme illustré sur la figure 2, dit « flux d'eau froide ». L'eau du premier flux d'eau F1 présente une première température Tf. Egalement, le robinet 1 est alimenté axialement et par un deuxième flux entrant d'eau C1, comme illustré en pointillés sur la figure 1 et sur la figure 3, dit « flux d'eau chaude ». L'eau du deuxième flux d'eau C1 présente une deuxième température Tc supérieure à la première température Tf.

L'unité de mélange 2 présente elle-même un axe principal qui est coaxial avec l'axe X4 susmentionné lorsque l'unité de mélange 2 est montée au sein de ce dernier. Dans ce qui suit, l'axe du robinet 1 et l'axe principal de l'unité de mélange 2 sont associés à la même référence X4.

De manière générale, l'unité de mélange 2 présente un forme sensiblement cylindrique coaxiale avec son axe principal X4.

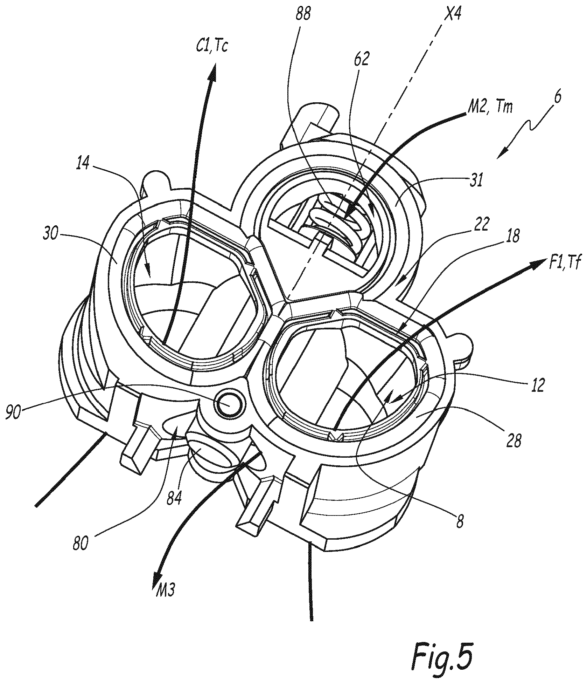

Dans cet exemple, l'unité de mélange 2 comprend deux parties, à savoir une cartouche 5, qui s'étend en partie supérieure du robinet 1, et un boîtier additionnel 6 représenté seul sur les figures 5 à 8. Le boîtier additionnel 6 est rapporté sur un côté inférieur 32 de la cartouche 5, en partie inférieure de l'unité de mélange 2. La cartouche 5 présente en particulier une forme générale cylindrique définissant l'axe principal X4 de l'unité de mélange 2, avec lequel la cartouche 5 est coaxiale. Le côté inférieur 32 de la cartouche 5 s'étend préférentiellement de façon perpendiculaire par rapport à l'axe X4.

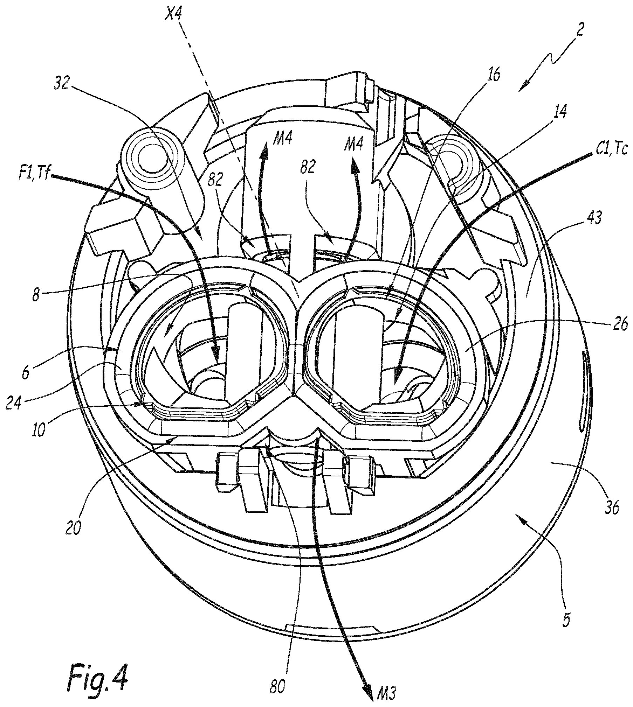

Le boîtier additionnel 6 présente un côté inférieur 20 visible notamment aux figures 1 et 4. Le boîtier 6 présente également un côté supérieur 22 visible notamment à la figure 5, opposé au côté inférieur 20 et généralement parallèle à ce dernier. Lorsque le boîtier 6 est rapporté sur la cartouche 5, les côtés 20 et 22 sont généralement orthogonaux à l'axe X4 et le côté supérieur 22 du boîtier 6 est plaqué contre le côté inférieur 32 de la cartouche 5. En d'autres termes, le boîtier 6 est rapporté, de façon amovible, contre le côté inférieur 32 de la cartouche 5, par l'intermédiaire de son côté supérieur 22.

Comme visible sur les figures 2, 4 et 5, le boîtier 6 est pourvu d'un premier conduit d'entrée 8 qui est traversant, sensiblement parallèle à l'axe X4 et qui relie le côté 20 au côté 22. Le flux d'eau froide F1 est destiné à circuler au travers du conduit 8, depuis une entrée inférieure 10 du conduit d'entrée 8, débouchant sur le côté inférieur 20 en partie inférieure de l'unité de mélange 2, jusqu'à une sortie intermédiaire 12 du conduit d'entrée 8, visible notamment sur la figure 5, débouchant à l'opposé de l'entrée inférieure 10, sur le côté supérieur 22 du boîtier 6. Le flux d'eau froide F1 traverse ainsi le boîtier 6 par l'intermédiaire du conduit d'entrée 8, lequel conduit le flux F1 jusqu'à la cartouche 5. L'entrée inférieure 10 et la sortie intermédiaire 12 sont préférentiellement centrées sur un axe parallèle à l'axe X4.

Comme visible sur les figures 3, 4 et 5, le boîtier 6 est pourvu d'un deuxième conduit d'entrée 14 qui est traversant, sensiblement parallèle à l'axe X4 et qui relie le côté 20 au côté 22. Le flux d'eau froide C1 est destiné à circuler au travers du conduit 14, depuis une entrée inférieure 16 du conduit d'entrée 14, débouchant sur le côté inférieur 20 en partie inférieure de l'unité de mélange 2, jusqu'à une sortie intermédiaire 18 du conduit d'entrée 14, visible notamment sur la figure 5, débouchant à l'opposé de l'entrée inférieure 16, sur le côté supérieur 22 du boîtier 6. Le flux d'eau chaude C1 traverse ainsi le boîtier 6 par l'intermédiaire du conduit d'entrée 14, lequel conduit le flux C1 jusqu'à la cartouche 5. L'entrée inférieure 16 et la sortie intermédiaire 18 sont préférentiellement centrées sur un axe parallèle à l'axe X4. Les entrées inférieures 10 et 16 sont adjacentes et les sorties intermédiaires 12 et 18 sont adjacentes.

Lorsque l'unité de mélange 2 est installée dans le corps 4 du robinet 1, les entrées inférieures 10 et 16 sont connectées fluidiquement à des moyens d'alimentation en eau de l'installation sanitaire, qui débouchent par exemple dans le fond du corps du robinet. Comme visible sur les figures 2 à 4, le côté inférieur 20 du boîtier 6, est pourvu d'une garniture d'étanchéité statique inférieure, formée d'un seul tenant, et comprenant des lobes annulaires 24 et 26. Ces lobes 24 et 26 entourent respectivement les entrées inférieures 10 et 16, pour assurer l'étanchéité de leur connexion fluidique avec des moyens d'alimentation en eau débouchant au fond du corps 4 du robinet 1. En variante, on peut prévoir des garnitures d'étanchéité annulaires séparées au lieu de lobes annulaires 24 et 26 venus de matière.

Les conduits d'entrée 8 et 14 du boîtier 6 sont connectés fluidiquement à la cartouche 5 de façon à alimenter cette cartouche 5 avec les flux F1 et C1, par l'intermédiaire du côté inférieur 32 de la cartouche 5, comme visible sur les figures 2 et 3.

La cartouche 5 comprend une paroi latérale sensiblement cylindrique 36 définissant l'axe X4 et s'élevant à partir du côté inférieur 32. La cartouche 5 comprend aussi une partie supérieure 38, terminant la paroi latérale 36 à l'opposé du côté inférieur 32. La cartouche 5 et le boîtier 6 sont maintenus dans le corps 4 du robinet 1 en étant serrés entre d'une part un écrou 39, vissé axialement par rapport à l'axe X4 dans le corps 4 de façon à être en appui axial contre la partie supérieure 38, et d'autre part le fond du corps 4, contre lequel le boîtier 6 est en appui axial. La cartouche 5 et le boîtier 6 sont donc mis en appui axial l'un contre l'autre sous la pression de l'écrou 39 et du fond du corps 4.

La cartouche 5 comprend également un levier de commande 40, visible en particulier sur les figures 1 à 3. Le levier 40 est configuré pour être actionné par un utilisateur du robinet 1, en étant monté sur la partie supérieure 38 de façon mobile par rapport à la paroi latérale 36, par l'intermédiaire d'un organe d'articulation 42. En l'espèce, l'organe d'articulation 42 autorise un pivotement du levier 40 par rapport à la paroi 36 autour de l'axe X4, en formant une pièce pivotante par rapport à la partie supérieure 38, autour de l'axe X4. Le levier 40 est lui-même monté pivotant sur l'organe d'articulation 42 par l'intermédiaire d'une liaison pivot 44, autorisant un pivotement du levier 40 autour d'un axe X44, visible sur la figure 1, perpendiculaire à l'axe X4, par rapport à l'organe 42.

La cartouche 5 renferme une chambre de mélange 46 interne, visible notamment sur les figures 1, 2 et 3, qui est délimitée notamment par le côté inférieur 32, la paroi latérale cylindrique 36, la partie supérieure 38, l'organe d'articulation 42 et le levier 40. La chambre de mélange 46 contient des moyens de mélange 34 du premier flux entrant F1 et du deuxième flux entrant C1 pour former, au sein de la cartouche 5, un flux sortant M2, dit « flux mitigé », présentant une température de sortie Tm.

Le côté inférieur 32 de la cartouche 5 est traversé par une première entrée 48, visible sur la figure 2, et par une deuxième entrée 50, visible sur la figure 3, débouchant toutes deux au sein de la chambre 46. L'entrée 48 est fluidiquement connectée à la sortie intermédiaire 12, alors que l'entrée 50 est fluidiquement connectée à la sortie intermédiaire 18, lorsque le côté inférieur 32 de la cartouche 5 est en contact étanche avec le côté supérieur 22 du boîtier 6. Les entrées 48 et 50 sont mises respectivement en regard avec les sorties 12 et 18. En d'autres termes, le premier conduit d'entrée 8 prolonge la première entrée 48 vers le bas, et le deuxième conduit d'entrée 14 prolonge la deuxième entrée 50 vers le bas. Les flux F1 et C1 sont ainsi admis au sein de la chambre de mélange 46 respectivement via les entrées 48 et 50.

Le côté inférieur 32 est également traversé par une sortie 52, dite « sortie principale », pour le flux sortant M2, débouchant d'une part dans la chambre de mélange 46, et d'autre part du côté du boîtier 6. Les entrées 48 et 50 ainsi que la sortie 52 sont réparties autour de l'axe X4, comme illustré sur les figures 4 et 5.

Dans l'exemple illustré, les moyens de mélange 34 comprennent un ensemble de disques de mélange 34A, 34B et 34C, qui sont contenus dans la chambre de mélange 46, comme cela est visible sur les figures 1 à 3. Les disques de mélange 34A, 34B et 34C sont en contact surfaciques les uns avec les autres et s'étendent dans des plans perpendiculaires à l'axe principal X4. L'ensemble de disques de mélange comprend un disque supérieur 34A, un disque intermédiaire 34B et un disque inférieur 34C, les disques supérieur 34A et intermédiaire 34B étant mobiles par rapport au disque 34C qui est fixe par rapport au côté inférieur 32. Comme cela n'est pas détaillé sur les figures, mais connu en tant que tel, le disque inférieur 34C comprend deux conduits d'entrée et un conduit de sortie qui le traversent et qui sont fluidiquement connectés respectivement aux entrées 48 et 50 et à la sortie principale 52. Le disque intermédiaire 34B est en contact glissant et étanche avec le disque 34C et comprend une ouïe borgne, non représentée, ouverte vers le bas sur le disque 34C. L'ouïe borgne est ainsi reliée fluidiquement à l'un ou plusieurs des conduits traversant le disque 34C, avec un degré d'occlusion variable en fonction de la position et de l'orientation du disque 34B par rapport au disque 34C. Ainsi, en fonction de la position relative des disques 34B et 34C, le débit respectif des flux entrants F1 et C1 admis au sein de la chambre 46 est réglé. Les flux entrants F1 et C1 circulent au travers du disque inférieur 34C de bas en haut, puis dans le disque intermédiaire 34B, au sein duquel ils se mélangent pour former le flux sortant M2, dirigé vers le bas au travers du disque inférieur 34C. Le rapport et la valeur des débits des flux entrants F1 et C1 permet de régler à la fois la température Tm et le débit du flux sortant M2. Une étanchéité des connexions fluidiques entre les disques 34B et 34C peut être assurée en dépit de la mobilité du disque 34B en utilisant une céramique adaptée pour constituer ces disques 34B et 34C, de façon connue en tant que telle. Le disque 34A forme quant à lui un moyen de transmission entre une patte inférieure 69 du levier 40 et le disque 34B, de sorte que la mise en mouvement du levier 40 entraîne un mouvement correspondant du disque 34B par rapport à la paroi 36 de la cartouche 5. De préférence, le disque 34A est solidaire du disque 34B, mais est constitué dans un matériau différent de celui du disque 34B et adapté à encaisser les mouvements imposés par le levier 40. Le disque 34B est ainsi entraîné en rotation autour d'un axe parallèle à l'axe X4 lors d'une rotation du levier autour de l'axe X4, ce qui permet de régler le rapport des débits des flux entrants F1 et C1 pour régler la température Tm. Le disque 34B est entraîné en translation selon une direction perpendiculaire à l'axe X4 lorsque le levier 40 est pivoté autour de l'axe X44, ce qui fait varier la valeur du débit du flux sortant M2.

Si l'on préfère la mise en œuvre d'une chambre de mélange à disques céramiques telle que décrite dans ce qui précède, on comprend que tous moyens de mélange connus et habituellement mis en œuvre dans les cartouches pour robinets mitigeurs peuvent être utilisés à la place. Dans tous les cas, le robinet mitigeur et la cartouche 5 peuvent être qualifiés de « monocommandes » dans la mesure où un seul levier 40 permet de commander à la fois le débit et la température Tm du flux sortant M2 par réglage des débits des flux entrants F1 et C1, présentant une température respective Tf et Tc de valeur différente.

La cartouche 5 comprend une couronne d'étanchéité 43, visible sur les figures 1 à 4, pourvue d'une garniture d'étanchéité statique 45, circulaire et externe, la couronne d'étanchéité 43 faisant saillie du côté inférieur 32 de la cartouche 5, de façon coaxiale avec l'axe X4. La couronne d'étanchéité 43 forme ainsi une jupe qui entoure partiellement le boîtier 6, et qui vient dans le prolongement de la forme cylindrique de la paroi 36 de la cartouche 5. La garniture 45 est ainsi en contact étanche avec le corps 4 du robinet 1, de forme cylindrique complémentaire, de sorte que la cartouche 5 et le fond du corps du robinet délimitent une chambre inférieure 53 étanche, dans laquelle le boîtier 6 est contenu, le bec 3 du robinet 1 étant fluidiquement connecté à ladite chambre inférieure.

Le flux sortant M2 formé au sein de la chambre de mélange 46 est évacué hors de cette dernière via la sortie 52, sous la pression des flux entrants F1 et C1, et hors de la cartouche 5, jusque dans une chambre 60 du boîtier 6, dite « chambre thermostatique », visible notamment sur les figures 1 et 6 à 8. La chambre 60 est fluidiquement connectée à la cartouche 5 par l'intermédiaire d'une entrée intermédiaire 62 du boîtier 6, laquelle débouche en surface du côté supérieur 22 du boîtier 6 et est fluidiquement connectée à la sortie principale 52 de la cartouche 5.

Pour assurer l'étanchéité des connexions fluidiques entre le boîtier 6 et la cartouche 5, le côté supérieur 22 du boîtier 6 est pourvu d'une garniture d'étanchéité statique supérieure, formée d'un seul tenant, visible sur les figure 2, 3 et 5 et comprenant des lobes annulaires 28, 30 et 31. Ces lobes annulaires 28, 30 et 31 entourent respectivement les sorties intermédiaires 12 et 18 et l'entrée intermédiaire 62, afin d'assurer l'étanchéité de la connexion fluidique respectivement avec les entrées 48 et 50 et la sortie principale 52 de la cartouche 5. En variante, on peut prévoir des garnitures d'étanchéité annulaires séparées au lieu de lobes annulaires 28, 30 et 31 venus de matière.

La chambre 60 présente une forme générale cylindrique, ou de révolution, qui définit un axe X60, dit « axe d'obturation » perpendiculaire à l'axe X4. Alternativement, l'axe X60 s'étend dans un plan qui est orthogonal à l'axe X4 sans croiser l'axe X4. Alternativement encore, l'axe X60 est non perpendiculaire à l'axe X4, mais simplement sécant avec ce dernier. En tout état de cause, l'axe X60 s'étend entre le conduit d'entrée 8 et le conduit d'entrée 14.

L'entrée intermédiaire 62 débouche radialement dans la chambre 60 par rapport à l'axe X60, entre une première extrémité fermée 64 de la chambre 60 et une deuxième extrémité ouverte 66 de la chambre 60. Au niveau de cette deuxième extrémité ouverte 66, la chambre 60 se termine par un col 68, dit « col d'obturation », coaxial avec l'axe X60. Dans cet exemple, le col 68 comprend un chanfrein conique centré sur l'axe X60 et ouvert dans une direction opposée à la première extrémité fermée 64. La chambre 60 conduit ainsi le flux sortant M2 depuis la sortie principale jusqu'à l'extrémité 66.

Le boîtier 6 renferme un élément thermostatique 70 de l'unité de mélange 2, qui s'étend le long de l'axe X60. Dans le présent exemple, l'élément thermostatique est formé par un assemblage de plusieurs pièces distinctes, dont certaines ne sont pas prévues pour se dilater à la chaleur et dont au moins une forme corps thermo-dilatable. Le long de cet axe X60, l'élément thermostatique 70 inclut une partie thermosensible 72 disposée dans une section de passage du flux sortant M2, cette section de passage étant délimitée, dans le présent exemple, par le col 68. De manière générale, la partie thermosensible 72 est disposée sur le trajet du flux sortant M2, c'est-à-dire à la sortie principale 52, de façon à être en contact avec le flux sortant M2. La partie thermosensible 72 comprend en particulier une coupelle 74, disposée dans la chambre 60 dans le passage du flux sortant M2. La coupelle 74 présente une forme de révolution autour de l'axe X60 et renferme le corps thermo-dilatable, qui est par exemple une cire adaptée. La coupelle 74 étant en contact avec le flux sortant M2, le corps thermo-dilatable se dilate et se contracte en fonction de la température Tm du flux sortant M2.

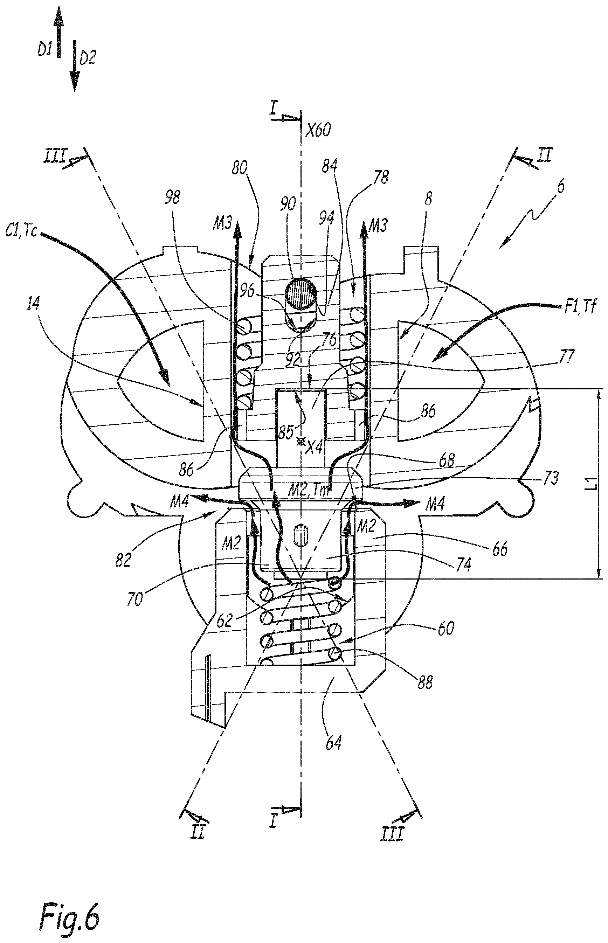

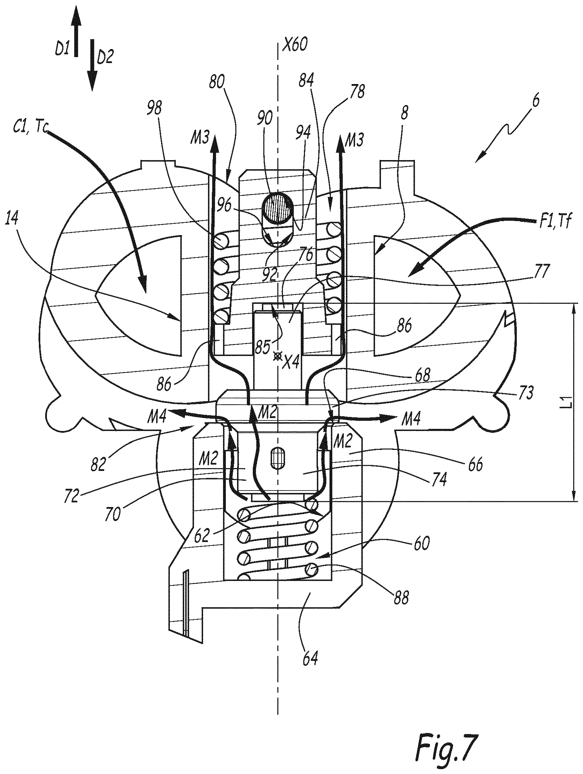

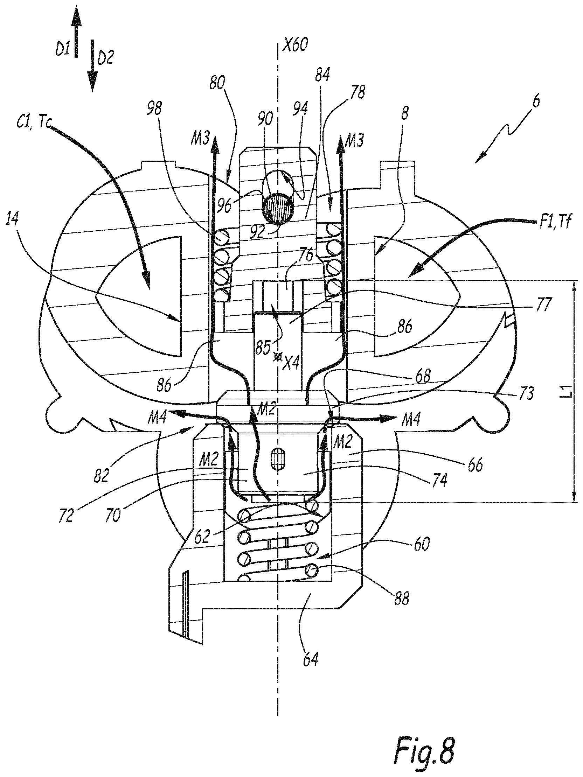

La partie thermosensible 72 est mobile en translation parallèlement à l'axe X60. La partie thermosensible 72 comprend un épaulement 73, apte à venir en contact avec le chanfrein du col 68, tout autour de l'axe X60, de sorte que la partie thermosensible 72 est apte à venir obturer le col 68 pour interrompre tout ou partie du flux sortant M2. La partie thermosensible 72, grâce à son épaulement 73, constitue ainsi un obturateur qui évolue en translation le long de l'axe X60, par rapport au col d'obturation 68, entre une position d'obturation totale ou partielle de la chambre thermostatique 60, et donc de la sortie principale 52, comme illustré sur les figures 7 et 8, et une position d'ouverture de la chambre thermostatique 60, et donc de la sortie principale 52, comme illustré sur la figure 6. La position d'ouverture est dirigée selon une direction arrière D1 par rapport à la position d'obturation, alors que la position d'obturation est dirigée selon une direction avant D2, opposée à la direction arrière D1, par rapport à la position d'ouverture. Le col 68 constitue ainsi un col d'obturation de la sortie principale 52, le col d'obturation 68 étant configuré pour être obturé par l'obturateur.

En position d'obturation, on préfère que l'obturateur autorise le passage d'un débit réduit du flux sortant M2, qui constitue une fraction seulement du débit de flux sortant M2 autorisé lorsque l'obturateur est en position d'ouverture. Pour cela, on prévoit préférentiellement une mise en contact non étanche de l'obturateur avec le col 68 en position d'obturation, comme illustré sur les figures 7 et 8. Optionnellement, une encoche de fuite du flux M2, non illustrée, est prévue axialement au travers de l'épaulement 73 et/ou du col 68 pour autoriser le passage du débit réduit de flux sortant M2 en dépit de la mise en position d'obturation de l'obturateur. Alternativement, on peut prévoir que l'obturateur interdise sensiblement tout échappement du flux M2 par l'intermédiaire du col 68 en position d'obturation, par exemple en pourvoyant le col 68 ou l'épaulement 73 d'un joint d'étanchéité adapté.

En position d'obturation, la partie thermosensible 72, c'est-à-dire l'obturateur, arrive en butée contre le col 68 dans la direction avant D2, comme illustré sur les figures 7 et 8. Le col 68 forme ainsi une butée avant de l'unité de mélange 2.

En variante non illustrée, on prévoit un obturateur séparé de la partie thermosensible 72. De préférence, l'obturateur est solidaire, notamment axialement, de la partie thermosensible, qui est mobile par rapport au col 68. En tout état de cause, l'obturateur est actionné par l'élément thermostatique pour évoluer entre la position d'obturation et la position d'ouverture de la sortie principale 52 décrites ci-avant.

L'unité de mélange 2 comprend un ressort principal 88 de rappel élastique de la partie thermosensible 72, c'est-à-dire de l'obturateur, depuis la position d'obturation vers la position d'ouverture. Ce ressort principal 88 est monté en compression le long de l'axe X60, entre la coupelle 74 et l'extrémité fermée 64 de la chambre thermostatique 60, de façon à exercer un effort de rappel élastique dans la direction arrière D1 sur la partie thermosensible 72. Alternativement à un ressort, tout élément principal de rappel élastique adapté peut être mis en œuvre pour rappeler l'obturateur depuis la position d'obturation vers la position d'ouverture.

Le boîtier 6 comprend une chambre de sortie 78 qui s'étend le long de l'axe X60 à partir du col 68, de façon à prolonger la chambre thermostatique 60 du boîtier 6. La chambre de sortie 78 présente une forme générale de révolution autour de l'axe X60, par exemple cylindrique, et est disposée entre le conduit d'entrée 8 et le conduit d'entrée 14, perpendiculairement, ou pour le moins de façon inclinée, par rapport à ces derniers, de sorte que le boîtier 6 est particulièrement compact. Dans le présent exemple, une partie de la partie thermosensible 72 comprenant l'épaulement 73 s'étend dans la chambre de sortie 78.

La chambre 78 se termine par une sortie axiale 80 opposée au col 68 et située entre les deux conduits d'entrée 8 et 14, entre le côté inférieur 20 et le côté supérieur 22 du boîtier 6, comme visible notamment sur la figure 4. La sortie axiale 80 est dirigée radialement par rapport à l'axe X4. La chambre 78 comprend en outre une sortie radiale 82, qui est ménagée radialement par rapport à l'axe X60 au travers d'une paroi de la chambre 78. Dans le présent exemple, la sortie radiale 82 est formée par deux ouïes séparées, s'étendant à partir du col 68, sur une partie seulement de la paroi de la chambre 78, laquelle est située entre le col 68 et les conduits d'entrée 8 et 14. La sortie radiale 82 débouche vers le bas de l'unité de mélange 2, plus précisément sur le côté inférieur 20 du boîtier 6, comme visible notamment sur la figure 4. Le flux sortant M2 traversant le col 68 se sépare ainsi en un flux sortant axial M3 et un flux sortant radial M4, représentés notamment sur les figures 1 et 6 à 8.

Alternativement, la sortie radiale 82 comprend une seule ouïe, ou un nombre d'ouïes supérieur à deux. En variante, la chambre 78 comprend plusieurs sorties radiales, s'étendant par exemple le long de l'axe X60. La présence combinée de ces sorties axiale 80 et radiale 82 permet de limiter l'impact de l'unité de mélange 2 sur le débit du flux sortant M1 en facilitant l'échappement des flux sortant M2, M3 et M4 hors du boîtier 6.

En tout état de cause, le flux sortant axial M3 et le flux sortant radial M4 sont déversés au sein de la chambre 53 inférieure du robinet 1, dans laquelle ils sont regroupés pour former le flux sortant M1 s'échappant du bec 3.

Comme cela est visible sur les figures 7 à 8, l'élément thermostatique 70 comprend une deuxième partie, formée dans cet exemple par un piston 76, s'étendant dans la chambre de sortie 78. Le piston 76 est par exemple de forme cylindrique à base circulaire. Le piston 76 est coaxial avec l'axe X60 et est monté mobile en translation par rapport à la partie thermosensible 72 selon le premier axe X60, sous l'action du corps thermo-dilatable contenu dans la coupelle 74. Plus précisément, le piston 76 est monté coulissant au sein d'un guide 77 de l'élément thermostatique 70, le guide 77 état coaxial avec l'axe X60 et formant un fourreau axial solidaire de la partie thermosensible 72.

L'unité de mélange 2 comprend également un poussoir de surcourse 84, contre lequel le piston 76 est en butée axiale le long de l'axe X60. Plus précisément, le poussoir de surcourse 84 comprend une surface axiale 85 qui forme une butée arrière, contre laquelle le piston est en appui dans la direction arrière D1.

Le poussoir de surcourse 84 est mobile en translation le long de l'axe X60 dans la chambre de sortie 78. Dans le présent exemple, le poussoir de surcourse 84 comprend des nervures externes axiales 86, par exemple quatre nervures 86. Les nervures 86 sont en contact glissant avec la paroi de la chambre de sortie 78 pour guider en translation le poussoir de surcourse 84 le long de l'axe X60. Les nervures externes axiales 86 ménageant entre elles des interstices de circulation du flux sortant axial M3 le long du poussoir de surcourse 84, afin de faciliter la circulation de ce flux M3 jusqu'à la sortie axiale 80.

Le poussoir de surcourse 84 translate entre une position normale, représentée sur les figures 6 et 7, est une position de surcourse, représentée sur la figure 8. En passant de la position normale à la position de surcourse, le poussoir de surcourse 84 se déplace à l'écart du col 68. En d'autres termes, la position de surcourse est située selon la direction arrière D1 par rapport à la position normale. Dans le présent exemple, le boîtier 6 comprend une goupille 90, fixe par rapport à la chambre de sortie 78, et s'étendant, dans cet exemple, parallèlement à l'axe X4 en travers de la sortie axiale 80. La goupille 90 traverse un trou oblong 92 ménagé au travers du poussoir de surcourse 84, perpendiculairement à l'axe X60. La goupille 90 limite ainsi le déplacement du poussoir 84 selon la direction D2,, dans laquelle une extrémité arrière 94 du trou oblong 92 est susceptible de venir en butée contre la goupille 90, ainsi que selon la direction D1, dans laquelle une extrémité avant 96 du trou oblong est susceptible de venir en butée contre la goupille 90. En pratique, en position normale, il existe un contact entre l'extrémité 94 du trou oblong 92 et la goupille, alors qu'en position de surcourse, il existe un jeu entre l'extrémité avant 96 du trou oblong 92 et la goupille 90. Ainsi, la goupille 90 contribue avantageusement à guider le poussoir de surcourse 84 en translation le long de l'axe X60, tout en bloquant sa rotation autour de cet axe X60 par rapport à la chambre de sortie 78.

Le boîtier 6 comprend un ressort auxiliaire 98, qui est compressé axialement le long de l'axe X60 entre la goupille 90 et une surface axiale arrière des nervures externes axiales 86. Le ressort auxiliaire 98 exerce une force de rappel élastique du poussoir de surcourse 84 depuis la position de surcourse vers la position normale. On prévoit que la force de rappel élastique du ressort auxiliaire 98 soit supérieure à celle de la force de rappel élastique du ressort principal 88. Pour cela, par exemple, la constante de raideur du ressort auxiliaire 98 est égale à une valeur d'environ deux fois la valeur de la constante de raideur du ressort principal 88. Dans le présent exemple, la chambre 78 forme un enveloppe le ressort 98 sur toute sa longueur, de sorte que le boîtier 6 est particulièrement compact.

Alternativement à un ressort auxiliaire 98, tout élément auxiliaire adapté peut être mis en œuvre pour appliquer un effort de rappel élastique du poussoir de surcourse 84 depuis la position de surcourse vers la position normale.

En conséquence des dispositions structurelles décrites ci-avant, l'unité de mélange 2 présente le fonctionnement qui suit. En fonction de la température Tm du flux sortant M2, l'élément thermostatique 70 fait varier la position relative de la partie thermosensible 72 et du piston 76 le long de l'axe d'obturation.

L'obturateur de l'unité de mélange 2 peut adopter une première configuration, dite « configuration d'ouverture » ou « position d'ouverture » illustrée sur les figures 1 et 6. La configuration d'ouverture est obtenue lorsque la température Tm est inférieure à une valeur de seuil prédéterminée, par exemple 46°C (degrés Celsius), l'élément thermostatique 70 présente une longueur L1, mesurée le long de l'axe X60, dont la valeur est minimale. En deçà de la valeur de seuil prédéterminée, le corps thermo-dilatable de la partie thermosensible 72 est conçu pour autoriser le piston 76 à rentrer dans le guide 77, de préférence entièrement, sous les efforts de rappel des ressorts 88 et 98. Plus précisément, le ressort principal 88 maintient l'élément thermostatique 70 en appui contre la surface axiale 85 du poussoir de surcourse 84, par l'intermédiaire de l'extrémité du piston 76 ou du guide 77. Dans cette configuration d'ouverture, l'épaulement 73 est en position d'ouverture du col d'obturation 68, en étant situé axialement à l'écart de ce dernier. La totalité du débit du flux sortant M2 est autorisé à s'échapper par le col 68. Dans cette configuration d'ouverture, le poussoir de surcourse 84 est maintenu en position normale, dans la mesure où la raideur du ressort auxiliaire 98 est supérieure à celle du ressort principal 88.

L'unité de mélange 2 peut adopter une deuxième configuration, dite « configuration d'obturation » ou « position d'obturation », illustrée sur les figures 7 et 8. Cette configuration d'obturation est adoptée lorsque la température Tm dépasse la valeur de seuil susmentionnée, la longueur L1 de l'élément thermostatique 70 atteint une valeur supérieure à celle de la configuration de la figure 6. En particulier, le corps thermodilatable a poussé le piston 76 selon la direction arrière D1 de façon à augmenter la valeur de la longueur L1. La valeur de la longueur L1 est augmentée à l'encontre du ressort principal 88, qui est par conséquent déformé en compression. L'épaulement 73 arrive en butée contre le col d'obturation 68 dans la direction avant D2, de sorte que l'obturateur qu'il forme est dans la position d'obturation. En d'autres termes, dans la configuration de la figure 7, la partie thermosensible 72 a été déplacée par rapport au col 68 dans la direction avant D2, par rapport à la configuration de la figure 6, jusqu'à parvenir en butée contre le col 68. En configuration d'obturation, le débit du flux sortant M2 passant par le col 68 est limité ou interrompu par l'obturateur. Par conséquent, la configuration d'obturation constitue une configuration de sécurité, dans la mesure où, si la température Tm dépasse la valeur de seuil prédéterminée, le débit du flux sortant M1 est limité ou interrompu pour éviter tout risque de brûlure de l'utilisateur du robinet mitigeur 1. Grâce à ce fonctionnement particulier, l'utilisateur est avantageusement alerté que les moyens de mélange 34 sont réglés pour générer un flux sortant M2 de température Tm excessive, car le flux sortant M1 s'échappant du bec 3 est très faible ou interrompu. De plus, le débit du flux sortant M1 étant abaissé lorsque la température est trop élevée, des économies d'eau chaude, c'est-à-dire des économies d'énergie, sont réalisées.

Dans cette configuration d'obturation, lorsque la température Tm est proche de la valeur de seuil prédéterminée, le poussoir de surcourse 84 est maintenu en position normale comme illustré sur la figure 7, dans la mesure où la raideur du ressort auxiliaire 98 est supérieure à celle du ressort principal 88. Par conséquent, le piston 76 reste sensiblement fixe par rapport au col d'obturation 68 entre la configuration de la figure 6 et la configuration de la figure 7.

Dans cette configuration d'obturation, lorsque la température Tm est plus éloignée de la valeur de seuil prédéterminée, et dépasse par exemple 50°C comme illustré sur la figure 8, la longueur L1 atteint une valeur suffisante pour que le poussoir de surcourse 84 soit déplacé par le piston 76 selon la direction arrière D1, jusqu'en position de surcourse. En particulier, lorsque l'élément thermostatique 70 est en appui contre le col 68 par l'intermédiaire de l'épaulement 73, toute augmentation de la valeur de la longueur L1 dans cette configuration d'obturation entraîne un déplacement du poussoir de surcourse 84 selon la direction D1, à l'encontre du ressort auxiliaire 98.

Selon une variante non illustrée du premier mode de réalisation des figures 1 à 8, le boîtier additionnel 6 est fixé à demeure ou est venu de matière avec la cartouche 5, de sorte que l'unité de mélange 2 forme un ensemble unitaire. Plus précisément, dans cette variante, le côté supérieur 22 du boîtier et le côté inférieur 32 de la cartouche sont regroupés pour former une pièce d'un seul tenant, ce qui évite avantageusement la mise en œuvre d'une garnitures d'étanchéité avec des lobes 28, 30 et 31, tout en facilitant le montage de l'unité de mélange 2 au sein du corps 4.

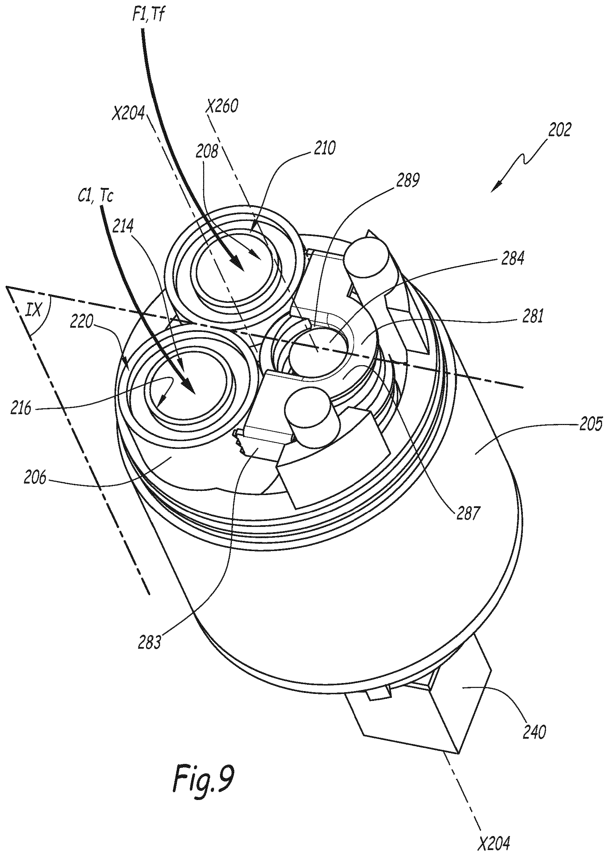

Les figures 9 à 12 illustrent une unité de mélange 202, selon le deuxième mode de réalisation, qui présente des caractéristiques similaires à celles de l'unité de mélange 2 du premier mode de réalisation illustré sur les figures 1 à 8. Les caractéristiques similaires du premier et du deuxième mode de réalisation susmentionnés sont désignées par un tracé similaire sur le dessin, et/ou des numéros de référence augmentés de 200 pour l'unité de mélange 202, par rapport à l'unité de mélange 2.

L'unité de mélange 202 est configurée pour être intégrée à un corps de robinet similaire à celui de la figure 1.

L'unité de mélange 202 des figures 9 à 12 définit un axe principal X204 et comprend, le long de cet axe X204, une cartouche 205, ainsi qu'un boîtier additionnel 206, qui présente un côté inférieur 220 et comprend un premier conduit d'entrée 208 avec une entrée inférieure 210 d'un premier flux entrant d'eau F1 à une température Tf, ainsi qu'un deuxième conduit d'entrée 14 avec une entrée inférieure 216 d'un deuxième flux entrant d'eau C1 à une température Tc.

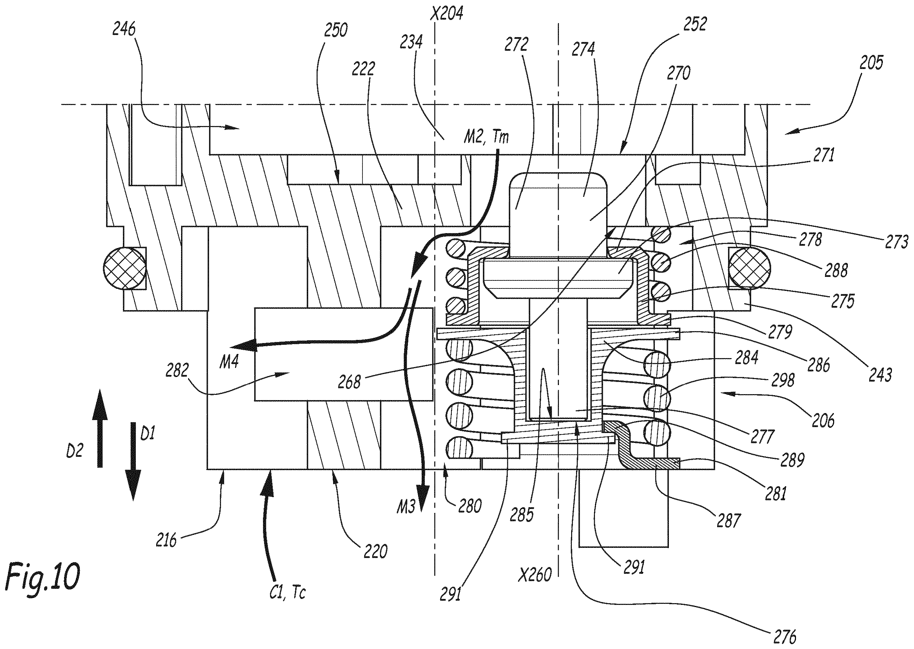

Comme représenté sur les figures 10 à 12, le boîtier additionnel 206 est venu de matière avec la cartouche 205, de sorte que l'unité de mélange 2 forme un ensemble unitaire. Plus précisément, le côté supérieur du boîtier 206 et le côté inférieur de la cartouche 205 sont regroupés pour former une pièce commune 222 d'un seul tenant. La pièce 222 est traversée par les deux conduits d'entrée 208 et 214, qui débouchent tous deux dans une chambre de mélange 246 interne de la cartouche 205, respectivement par l'intermédiaire d'une première entrée, non visible aux figures, et d'une deuxième entrée 250, visible sur les figures 10 à 12.

Dans le mode de réalisation des figures 9 à 12, le flux entrants F1 et C1 sont mélangés dans la chambre de mélange 246 à l'aide de moyens de mélange 234 de la cartouche 205, qui comprennent préférentiellement un ensemble de disques, non visible sur les figures, similaire à celui décrit ci-avant. Les moyens de mélange 234 sont réglables à l'aide d'un levier de commande 240 de la cartouche 205. Le mélange des flux F1 et C1 donne lieu à l'émission d'un flux d'eau sortant M2, à une température Tm, hors de la chambre 246 de la cartouche 205, par l'intermédiaire d'une sortie principale 252, ménagée dans la pièce commune 222.

Le boîtier 206 comprend un col d'obturation 268, qui est fluidiquement connecté à la sortie 252 en étant formé à une surface inférieure de la pièce 222. Le col 268 et la sortie 252 sont alignés sur un axe d'obturation X260 parallèle à l'axe X204 et préférentiellement non confondu avec l'axe X204.

L'unité de mélange 202 renferme un élément thermostatique 270, qui s'étend coaxialement avec l'axe d'obturation X260. L'élément thermostatique 270 comprend une partie thermosensible 272 disposée dans une section de passage du flux sortant M2 délimitée perpendiculairement à l'axe X260 par le col 268. La partie thermosensible 272 comprend une coupelle 274 avec un épaulement 273, coaxial avec l'axe X260. Une pièce d'obturation 275, comprenant une collerette interne 271, est monté en appui axial, vers le bas, contre l'épaulement 273, par l'intermédiaire de la collerette interne 271. Cette collerette interne 271 entoure la coupelle 274, de sorte que la pièce d'obturation 275 est liée radialement à la partie thermosensible 272.

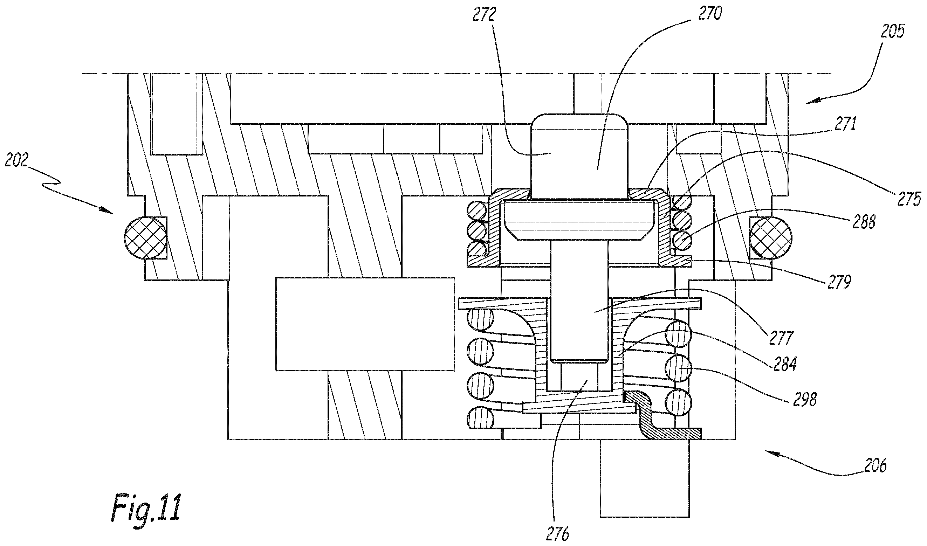

La partie thermosensible 272 et la pièce d'obturation 275 forment un obturateur et sont solidairement mobiles le long de l'axe X260 entre une configuration d'ouverture, illustrée sur la figure 10 et une configuration d'obturation, illustrée sur la figure 11. En configuration d'obturation, le bord extérieur de la collerette interne 271 vient en butée avant contre le col 268, selon une direction avant D2 opposée à la direction D1. Ce bord extérieur forme un chanfrein conique centré sur l'axe X260, le col 268 étant dénué de chanfrein.

La pièce d'obturation 275 comprend également une collerette externe 279 axialement opposée à la collerette interne 271. L'unité de mélange 202 comprend un ressort principal 288 de rappel élastique interposé entre la collerette externe 279 et le col 268, de façon à exercer élastiquement une force axiale qui a tendance à écarter l'obturateur du col 268, de façon à élastiquement rappeler l'obturateur vers la configuration d'ouverture.

L'élément thermostatique 270 comprend également un piston 276 coaxial avec l'axe X260 et monté mobile en translation axiale par rapport à la partie themosensible 272, par l'intermédiaire d'un guide 277, sous l'action d'un corps thermo-dilatable contenu de l'élément thermostatique 270.

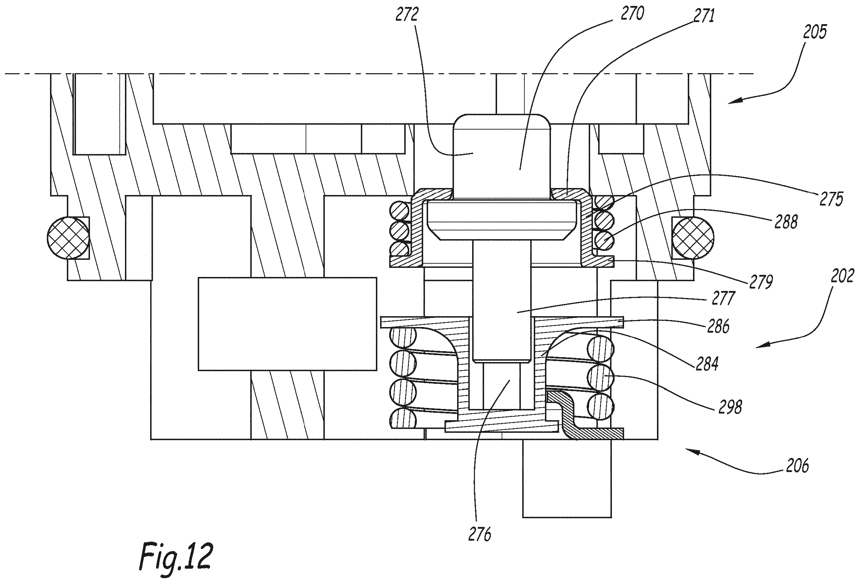

L'unité de mélange 202 comprend aussi un poussoir de surcourse 284, contre une butée arrière 285 duquel le piston 276 est en butée axiale le long de l'axe X260, selon une direction arrière D1 orientée vers le bas de la figure 10. Le poussoir de surcourse 284 est mobile en translation le long de l'axe X260, entre une position normale, représentée sur les figures 10 et 11, est une position de surcourse, représentée sur la figure 12.

L'unité de mélange 202 comprend également un étrier 281, qui est rapporté sur la cartouche 205 de façon à être axialement lié à cette dernière le long de l'axe X260. L'étrier 281 comprend en l'espèce deux pattes d'attache à la cartouche 205, parallèles à l'axe X204, dont une patte 283 est partiellement visible sur la figure 9. Les pattes d'attache 283 s'étendent de part et d'autre de l'élément thermostatique 270 et du col 268. Les pattes d'attache sont reliées entre elles par un pont 287 de l'étrier 281, le pont 287 présentant une forme en U pour contourner l'axe X260 et le poussoir de surcourse 284. Le pont 287 est pourvu d'une gouttière interne 289, qui forme une surface axiale d'appui d'un épaulement 291 du poussoir 284 dans la direction D2.

L'unité 202 comprend un ressort auxiliaire 298, qui est interposé axialement le long de l'axe X60, entre une collerette 286 du poussoir 284 et le pont 287 de l'étrier 281, de façon à élastiquement repousser le poussoir 284 en direction du col 268.

En fonction de la position du piston 276 par rapport à la partie thermosensible 272, la longueur de l'élément thermostatique 270 est variée, de sorte que l'obturateur évolue entre sa configuration d'ouverture, visible sur la figure 10, et sa configuration d'obturation, visible sur la figure 11. Dans ces configurations, le poussoir 284 est maintenu en position normale sous l'action du ressort auxiliaire 298. Néanmoins, en configuration d'obturation, si la longueur de l'élément thermostatique 270 augmente davantage, le poussoir 284 passe en position de surcourse à l'encontre du ressort auxiliaire 298, tel qu'illustrée sur la figure 12. Ce déplacement dans la direction D1 du poussoir 284 est obtenu par mise en appui de l'obturateur contre le col 268 et augmentation de la longueur de l'élément thermostatique 270. En position de surcourse, le poussoir 284 est plus écarté du col 268 qu'en position normale.

Les conduits d'entrée 208 et 214, la pièce commune 222, ainsi qu'une couronne d'étanchéité 243 de la cartouche 205, délimitent un logement de sortie 278, centré sur l'axe X260, dans lequel sont logés l'obturateur, les ressorts 288 et 298 ainsi et le poussoir 284. Le logement de sortie 278 s'étend à partie du col d'obturation 268 et forme une cavité, qui est ouverte pour former une sortie axiale 280 en partie basse de l'unité 202. Dans ce deuxième mode de réalisation, une portion du ressort auxiliaire 298 se dégage du logement de sortie 278, lequel n'épouse pas tout le pourtour dudit ressort 298 à la différence de la chambre de sortie 78 du mode de réalisation des figures 1 à 8. La forme particulière du logement de sortie 278 facilite l'écoulement du flux sortant M2. Une sortie radiale 282 est optionnellement ménagée, radialement par rapport à l'axe d'obturation X260, entre les conduits 208 et 214. Le flux sortant M2 traversant le col 68 se sépare en un flux sortant axial M3, au travers de la sortie axiale 280, et un flux sortant radial M4, au travers de la sortie radiale 282.

En variante, la cartouche 205 et le boîtier 206 sont assemblés l'un avec l'autre comme c'est le cas pour l'unité de mélange 2 des figures 1 à 8.

Dans les exemples définis ci-dessus, l'élément thermostatique 70 ou 270 de l'unité 2 ou 202 forme, de manière plus générale, un actuateur thermosensible, avec une première partie, formée par la partie thermosensible 72 ou 272, et une deuxième partie, formée par le piston 76 ou 276. Dans ces exemples, la première partie et la deuxième partie forment des pièces distinctes l'une de l'autre.

Alternativement, quel que soit le mode de réalisation de l'unité de mélange, l'actuateur thermosensible peut être formé d'un seul tenant, en étant avantageusement réalisé dans un matériau thermodilatable, tel qu'un alliage à mémoire de forme. Dans ce cas alternatif, la première et la deuxième partie de l'actuateur thermosensible sont monobloc, le déplacement d'une partie par rapport à l'autre étant le résultat d'une déformation du matériau thermosensible.

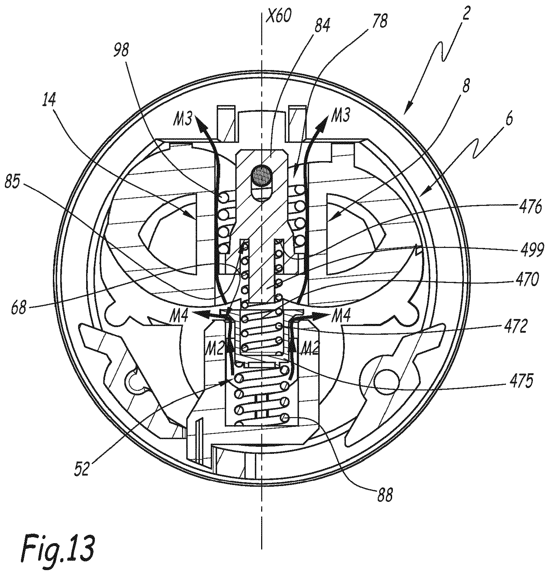

La figure 13 illustre un troisième mode de réalisation de l'invention correspondant à ce cas alternatif. Il s'agit de l'unité de mélange 2 du premier mode de réalisation illustré aux figures 1 à 8, dans laquelle on a remplacé l'élément thermostatique 70 par un actuateur thermosensible 470 en alliage à mémoire de forme, associé à un obturateur 475 rapporté. L'actuateur thermosensible 470 présente une forme de ressort hélicoïdal coaxial ou parallèle avec l'axe d'obturation X60. L'actuateur thermosensible 470 comprend d'une part une première partie 472, thermosensible, disposée à la sortie principale 52, à la place de la partie thermosensible 72 définie ci-avant, et d'autre part une deuxième partie 476 également thermosensible, formant une pièce d'un seul tenant avec la première partie 472. La deuxième partie 476 est actionnée en translation par la première partie 472 le long de l'axe d'obturation X60 par déformation de l'actuateur thermosensible 470 en fonction de la température Tm du flux sortant M2. L'obturateur 475 présente une forme similaire à celle de la coupelle 74 définie ci-avant, et est porté par la première partie 472 de l'actuateur 470, de façon à pouvoir évoluer entre les configurations d'ouverture et d'obturation du col 68. Sur la figure 13, l'obturateur 475 est en position d'ouverture. La deuxième partie 476 est en appui axial contre la surface axiale 85 du poussoir de surcourse 84. Ce dernier est avantageusement pourvu d'une tige de guidage 499, faisant saillie de la surface 85 coaxialement avec l'axe X60, sur laquelle l'actuateur thermosensible 470 est enfilé, de façon à être radialement maintenu ou retenu.

Alternativement à une forme de ressort hélicoïdal, d'autres formes de réalisation de l'actuateur thermosensible 470 sont possibles, par exemple en soufflet, en fonction de l'application.

L'unité de mélange 202 des figures 9 à 12 peut également inclure un actuateur thermosensible en alliage à mémoire de forme, cet actuateur étant alors adapté pour remplacer l'élément thermostatique 270.

Dans ce qui précède, on met en œuvre des flux d'eau. Toutefois, quel que soit le mode de réalisation, d'autres fluides peuvent être utilisés en lieu et place de l'eau, de préférence des flux de fluides liquides. De manière générale, l'entrée 48 correspond à une arrivée d'un premier flux entrant F1 de fluide présentant une première température Tf, alors que l'entrée 50 ou 250 correspond à une arrivée d'un deuxième flux entrant C1 de fluide présentant une deuxième température Tc qui est supérieure à la première température Tf. Les fluides du premier flux entrant F1 et du deuxième flux entrant C1 sont préférentiellement identiques et liquides, mais peuvent toutefois être de nature différente. L'eau s'échappant du bec 3 du robinet 1 correspond ainsi à un flux sortant M1 de fluide, qui est formé par mélange des premier et deuxième flux entrant F1 et C1 au sein du robinet mitigeur 1.

## Revendications

1. Unité de mélange (2 ; 202) pour un robinet mitigeur (1), l'unité de mélange comprenant :
- une première entrée (48) d'un premier flux entrant (F1) de fluide présentant une première température (Tf),
- une deuxième entrée (50 ; 250) d'un deuxième flux entrant (C1) de fluide présentant une deuxième température (Tc) supérieure à la première température,
- des moyens de mélange (34 ; 234) du premier flux entrant avec le deuxième flux entrant pour former un flux sortant (M2) de fluide présentant une température de sortie (Tm),
- une sortie principale (52 ; 252) pour le flux sortant, et
- un actuateur thermosensible (70 ; 270 ; 470), comprenant :
∘ une première partie (72 ; 272 ; 472), qui est thermosensible et qui est disposée, au moins en partie, à la sortie principale, et
∘ une deuxième partie (76 ; 276 ; 476), actionnée en translation par la première partie selon un axe d'obturation (X60 ; X260),
**caractérisée en ce que** l'unité de mélange (2 ; 202) comprend un obturateur (72, 73 ; 272, 275 ; 475), qui est actionné par l'actuateur thermosensible (70 ; 270 ; 470), de façon à évoluer entre une position d'obturation, au moins partielle, de la sortie principale (52 ; 252) et une position d'ouverture de la sortie principale, en fonction de la position relative de la première partie (72 ; 272 ; 472) et de la deuxième partie (76 ; 276 ; 476) de l'actuateur thermosensible le long de l'axe d'obturation (X60 ; X260).

2. Unité de mélange (2 ; 202) selon la revendication 1, **caractérisée en ce que** :
- l'unité de mélange comprend une butée arrière (85 ; 285), la deuxième partie (76 ; 276 ; 476) étant en appui contre la butée arrière selon une direction arrière (D1) le long de l'axe d'obturation (X60), et
- l'obturateur (72, 73 ; 272, 275 ; 475) est solidaire de la première partie (72 ; 272 ; 472), ou est formé au moins en partie par la première partie, la première partie étant mobile entre la position d'obturation et la position d'ouverture.

3. Unité de mélange (2 ; 202) selon la revendication 2, **caractérisée en ce que** l'unité de mélange comprend :
- une butée avant (68 ; 268), contre laquelle l'obturateur (72, 73 ; 272, 275 ; 475) arrive en butée dans une direction avant (D2), opposée à la direction arrière (D1), lorsque l'obturateur arrive en position d'obturation,
- un poussoir de surcourse (84 ; 284), qui est mobile en translation le long de l'axe d'obturation (X60 ; X260) entre une position normale et une position de surcourse située dans la direction arrière (D1) par rapport à la position normale, le poussoir de surcourse comprenant la butée arrière (85 ; 285), et
- un élément auxiliaire (98 ; 298) de rappel élastique du poussoir de surcourse depuis la position de surcourse vers la position normale.

4. Unité de mélange (2) selon la revendication 3, **caractérisée en ce que** le poussoir de surcourse (84) comprend des nervures externes axiales (86) de guidage en translation du poussoir de surcourse (84) le long de l'axe d'obturation (X60), les nervures externes axiales ménageant entre elles des interstices de circulation du flux sortant (M3) le long du poussoir de surcourse.

5. Unité de mélange (2 ; 202) selon l'une quelconque des revendications précédentes, **caractérisée en ce que** l'unité de mélange comprend un élément principal (88 ; 288) de rappel élastique de l'obturateur (72, 73 ; 272, 275 ; 475) depuis la position d'obturation vers la position d'ouverture.

6. Unité de mélange (2 ; 202) selon l'une quelconque des revendications précédentes, **caractérisée en ce que** :
- les moyens de mélange (34 ; 234) comprennent une chambre de mélange (46 ; 246), au sein de laquelle débouchent la première entrée (48), la deuxième entrée (50 ; 250) et la sortie principale (52 ; 252), et
- l'unité de mélange comprend un col d'obturation (68 ; 268), qui est fluidiquement connecté à la sortie principale et qui est configuré pour être obturé par l'obturateur (72, 73 ; 272, 275) en position d'obturation, la première partie (72 ; 272 ; 472) étant disposée dans une section de passage du col d'obturation.

7. Unité de mélange (2 ; 202) selon la revendication 6, **caractérisée en ce que** :
- l'unité de mélange comprend une chambre de sortie (78), ou un logement de sortie (278), qui s'étend le long de l'axe d'obturation (X60 ; X260) à partir du col d'obturation (68 ; 268) jusqu'à une sortie axiale (80 ; 280) de l'unité de mélange, et
- la chambre de sortie ou le logement de sortie comprend au moins une sortie radiale (82 ; 282), laquelle est ménagée radialement par rapport à l'axe d'obturation (X60 ; X260), la sortie radiale s'étendant de préférence à partir du col d'obturation.

8. Unité de mélange (2) selon la revendication 7, **caractérisée en ce que** l'unité de mélange comprend :
- la chambre de sortie (78),
- un premier conduit d'entrée (8), qui prolonge la première entrée (48), et
- un deuxième conduit d'entrée (14), qui prolonge la deuxième entrée (50), la chambre de sortie étant disposée entre le premier conduit d'entrée et le deuxième conduit d'entrée.

9. Unité de mélange (2) selon l'une quelconque des revendications précédentes, **caractérisée en ce que** l'unité de mélange comprend :
- une cartouche (5), qui inclut les moyens de mélange (34) et qui comprend un côté inférieur (32), traversé par la première entrée (48), par la deuxième entrée (50) et par la sortie principale (52), et
- un boîtier additionnel (6), qui renferme l'actuateur thermosensible (70), ainsi que l'obturateur (72, 73), et qui comprend un côté supérieur (22) par l'intermédiaire duquel le boîtier additionnel est rapporté contre le côté inférieur de la cartouche.

10. Unité de mélange (2 ; 202) selon l'une quelconque des revendications précédentes, **caractérisée en ce que** l'actuateur thermosensible est un élément thermostatique (70 ; 270), **en ce que** la première partie comprend une coupelle (74) renfermant un corps thermo-dilatable, et **en ce que** la deuxième partie (76 ; 276) est un piston coulissant par rapport à la première partie (72 ; 272) selon l'axe d'obturation (X60 ; X260).

11. Unité de mélange (2) selon l'une quelconque des revendications 1 à 9, **caractérisée en ce que** :
- l'actuateur thermosensible (470) est réalisé, au moins en partie, en alliage à mémoire de forme, de façon à être thermodilatable selon l'axe d'obturation (X60),
- la deuxième partie (476) de l'actuateur thermosensible est thermosensible et forme une pièce d'un seul tenant avec la première partie (472), et
- la translation de la deuxième partie par rapport à la première partie est obtenue par déformation réversible de l'actuateur thermosensible.

12. Unité de mélange (2) selon l'une quelconque des revendications précédentes, **caractérisée en ce que** l'unité de mélange présente une forme générale cylindrique définissant un axe principal (X4) de l'unité de mélange, l'axe d'obturation (X60) s'étendant soit dans un plan sensiblement orthogonal à l'axe (X4), soit parallèlement à l'axe (X4).

13. Robinet mitigeur (1) comprenant une unité de mélange (2 ; 202) conforme à l'une quelconque des revendications précédentes.

## Patentansprüche

1. Mischeinheit (2; 202) für einen Mischhahn (1), wobei die Mischeinheit umfasst:
- einen ersten Eingang (48) eines ersten eintretenden Fluidflusses (F1), der eine erste Temperatur (Tf) aufweist,
- einen zweiten Eingang (50; 250) eines zweiten eintretenden Fluidflusses (C1), der eine zweite Temperatur (Te), die höher ist als die erste Temperatur, aufweist,
Mittel (34; 234) zum Mischen des ersten eintretenden Flusses mit dem zweiten eintretenden Fluss, um einen austretenden Fluidfluss (M2) zu bilden, der eine Ausgangstemperatur (Tm) aufweist,
- einen Hauptausgang (52; 252) für den austretenden Fluss und
- einen wärmeempfindlichen Aktuator (70; 270; 470), der umfasst:
o einen ersten Teil (72; 272; 472), der wärmeempfindlich ist, und der mindestens zum Teil an dem Hauptausgang angeordnet ist, und
o einen zweiten Teil (76; 276; 476), der in Verschiebung von dem ersten Teil entlang einer Verschlussachse (X60; X260) betätigt wird,
**dadurch gekennzeichnet, dass** die Mischeinheit (2; 202) einen Verschluss (72, 73; 272, 275; 475) umfasst, der von dem wärmeempfindlichen Aktuator (70; 270; 470) derart betätigt wird, dass er sich zwischen einer mindestens teilweisen Verschlussposition des Hauptausgangs (52; 252) und einer Öffnungsposition des Hauptausgangs in Abhängigkeit von der relativen Position des ersten Teils (72; 272; 472) und des zweiten Teils (76; 276; 476) des wärmeempfindlichen Aktuators entlang der Verschlussachse (X60; X260) bewegt.

2. Mischeinheit (2; 202) nach Anspruch 1, **dadurch gekennzeichnet, dass**:
- die Mischeinheit einen hinteren Anschlag (85; 285) umfasst, wobei der zweite Teil (76; 276; 476) gegen den hinteren Anschlag in einer Rückwärtsrichtung (D1) entlang der Verschlussachse (X60) in Auflage ist, und
- der Verschluss (72, 73; 272, 275; 475) mit dem ersten Teil (72; 272; 472) fest verbunden oder mindestens zum Teil von dem ersten Teil gebildet ist, wobei der erste Teil zwischen der Verschlussposition und der Öffnungsposition beweglich ist.

3. Mischeinheit (2; 202) nach Anspruch 2, **dadurch gekennzeichnet, dass** die Mischeinheit umfasst:
- einen vorderen Anschlag (68; 268), gegen den der Verschluss (72, 73; 272, 275; 475) in eine Vorwärtsrichtung (D2), die der Rückwärtsrichtung (D1) entgegengesetzt ist, zum Anschlagen kommt, wenn der Verschluss in Verschlussposition ankommt,
- einen Überhubstößel (84; 284), der in Verschiebung entlang der Verschlussachse (X60; X260) zwischen einer normalen Position und einer Überhubposition, die in die Rückwärtsrichtung (D1) in Bezug auf die normale Position liegt, beweglich ist, wobei der Überhubstößel den hinteren Anschlag (85; 285) umfasst, und
- ein Hilfselement (98; 298) zum elastischen Rückstellen des Überhubstößels von der Überhubposition zu der normalen Position.

4. Mischeinheit (2) nach Anspruch 3, **dadurch gekennzeichnet, dass** der Überhubstößel (84) externe axiale Rippen (86) zum Führen in Verschiebung des Überhubstößels (84) entlang der Verschlussachse (X60) umfasst, wobei die externen axialen Rippen zwischeneinander Zirkulationszwischenräume des austretenden Flusses (M3) entlang des Überhubstößels einrichten.

5. Mischeinheit (2; 202) nach einem der vorstehenden Ansprüche, **dadurch gekennzeichnet, dass** die Mischeinheit ein Hauptelement (88; 288) zum elastischen Rückstellen des Verschlusses (72, 73; 272, 275; 475) von der Verschlussposition zu der Öffnungsposition umfasst.

6. Mischeinheit (2; 202) nach einem der vorstehenden Ansprüche, **dadurch gekennzeichnet, dass**:
- die Mischmittel (34; 234) eine Mischkammer (46; 246) umfassen, in die der erste Eingang (48), der zweite Eingang (50; 250) und der Hauptausgang (52; 252) münden, und
- die Mischeinheit einen Verschlussbund (68; 268) umfasst, der fluidisch mit dem Hauptausgang verbunden und dazu konfiguriert ist, von dem Verschluss (72, 73; 272, 275) in Verschlussposition verschlossen zu werden, wobei der erste Teil (72; 272; 472) in einem Durchgangsabschnitt des Verschlussbundes angeordnet ist.

7. Mischeinheit (2; 202) nach Anspruch 6, **dadurch gekennzeichnet, dass**:
- die Mischeinheit eine Ausgangskammer (78) oder eine Ausgangsaufnahme (278), die sich entlang der Verschlussachse (X60; X260) ausgehend von dem Verschlussbund (68; 268) bis zu einem axialen Ausgang (80; 280) der Mischeinheit erstreckt, umfasst, und
- die Ausgangskammer oder die Ausgangsaufnahme mindestens einen radialen Ausgang (82; 282) umfasst, der radial in Bezug auf die Verschlussachse (X60; X260) eingerichtet ist, wobei sich der radiale Ausgang vorzugsweise ausgehend von dem Verschlussbund erstreckt.

8. Mischeinheit (2) nach Anspruch 7, **dadurch gekennzeichnet, dass** die Mischeinheit umfasst:
- die Ausgangskammer (78),
- eine erste Eingangsleitung (8), die den ersten Eingang (48) verlängert, und
- eine zweite Eingangsleitung (14), die den zweiten Eingang (50) verlängert, wobei die Ausgangskammer zwischen der ersten Eingangsleitung und der zweiten Eingangsleitung angeordnet ist.

9. Mischeinheit (2) nach einem der vorstehenden Ansprüche, **dadurch gekennzeichnet, dass** die Mischeinheit umfasst:
- eine Patrone (5), die die Mischmittel (34) beinhaltet, und die eine untere Seite (32) umfasst, die von dem ersten Eingang (48), von dem zweiten Eingang (50) und von dem Hauptausgang (52) durchquert ist, und
- ein zusätzliches Gehäuse (6), das den wärmeempfindlichen Aktuator (70) sowie den Verschluss (72, 73) einschließt und eine obere Seite (22) umfasst, mittels derer das zusätzliche Gehäuse gegen die untere Seite der Kartusche angebaut ist.

10. Mischeinheit (2; 202) nach einem der vorstehenden Ansprüche, **dadurch gekennzeichnet, dass** der wärmeempfindliche Aktuator ein Thermostatelement (70; 270) ist, dass der erste Teil eine Schale (74) umfasst, die einen durch Wärme dehnbaren Körper einschließt, und dass der zweite Teil (76; 276) ein Kolben ist, der in Bezug auf den ersten Teil (72; 272) entlang der Verschlussachse (X60; X260) gleitet.

11. Mischeinheit (2) nach einem der vorstehenden Ansprüche 1 bis 9, **dadurch gekennzeichnet, dass**:
- der wärmeempfindliche Aktuator (470) mindestens zum Teil derart aus Formgedächtnislegierung hergestellt ist, dass er entlang der Verschlussachse (X60) durch Wärme dehnbar ist,
- der zweite Teil (476) des wärmeempfindlichen Aktuators wärmeempfindlich ist und ein einstückiges Teil mit dem ersten Teil (472) bildet, und
- die Verschiebung des zweiten Teils in Bezug auf den ersten Teil durch umkehrbare Verformung des wärmeempfindlichen Aktuators erhalten wird.

12. Mischeinheit (2) nach einem der vorstehenden Ansprüche, **dadurch gekennzeichnet, dass** die Mischeinheit eine allgemeine zylindrische Form aufweist, die eine Hauptachse (X4) der Mischeinheit definiert, wobei sich die Verschlussachse (X60) entweder in einer Ebene im Wesentlichen orthogonal zu der Achse (X4) oder parallel zu der Achse (X4) erstreckt.

13. Mischhahn (1), der eine Mischeinheit (2; 202) nach einem der vorstehenden Ansprüche umfasst.

## Claims

1. A mixing unit (2; 202) for a mixer tap (1), the mixing unit comprising:
- a first inlet (48) for a first incoming stream (F1) of fluid having a first temperature (Tf),
- a second inlet (50; 250) for a second incoming stream (C1) of fluid having a second temperature (Tc) higher than the first temperature,
- mixing means (34; 234) for mixing the first incoming stream with the second incoming stream to form an outgoing stream (M2) of fluid having an outlet temperature (Tm),
- a main outlet (52; 252) for the outgoing stream, and
- a heat-sensitive actuator (70; 270; 470), comprising:
∘ a first part (72; 272; 472), which is heat-sensitive and which is arranged, at least in part, at the main outlet, and
∘ a second part (76; 276; 476), actuated in translation by the first part along a closing axis (X60; X260),
**characterized in that** the mixing unit (2; 202) comprises a shutter (72, 73; 272, 275; 475), which is actuated by the heat-sensitive actuator (70; 270; 470), so as to move between a closed position, at least partial, of the main outlet (52; 252) and an open position of the main outlet, based on the relative position of the first part (72; 272; 472) and the second part (76; 276; 476) of the heat-sensitive actuator along the closing axis (X60; X260).

2. The mixing unit (2; 202) according to claim 1, **characterized in that**:
- the mixing unit comprises a rear stop (85; 285), the second part (76; 276; 476) bearing against the rear stop in a rear direction (D1) along the closing axis (X60), and
- the shutter (72, 73; 272, 275; 475) is secured to the first part (72; 272; 472), or is formed at least in part by the first part, the first part being movable between the closed position and the open position.

3. The mixing unit (2; 202) according to claim 2, **characterized in that** the mixing unit comprises:
- a front stop (68; 268), against which the shutter (72, 73; 272, 275; 475) abuts in a forward direction (D2), opposite the rear direction (D1), when the shutter arrives in the closed position,
- an overtravel plunger (84; 284), which is translatable along the closing axis (X60; X260) between a normal position and an overtravel position situated in the rear direction (D1) relative to the normal position, the overtravel plunger comprising the rear stop (85; 285), and
- an auxiliary resilient return element (98; 298) of the overtravel plunger from the overtravel position to the normal position.

4. The mixing unit (2) according to claim 3, **characterized in that** the overtravel plunger (84) comprises axial outer ribs (86) guiding the translation of the overtravel plunger (84) along the closing axis (X60), the axial outer ribs arranging circulation interstices between them for the exiting stream (M3) along the overtravel plunger.

5. The mixing unit (2; 202) according to any one of the preceding claims, **characterized in that** the mixing unit comprises a main resilient return element (88; 288) of the shutter (72, 73; 272, 275; 475) from the closed position to the open position.

6. The mixing unit (2; 202) according to any one of the preceding claims, **characterized in that**:
- the mixing means (34; 234) comprise a mixing chamber (46; 246) within which the first inlet (48), the second inlet (50; 250) and the main outlet (52; 252) emerge, and
- the mixing unit comprises a closing neck (68; 268), which is fluidly connected to the main outlet and which is configured to be closed by the shutter (72, 73; 272, 275) in the closed position, the first part (72; 272; 472) being arranged in a passage section of the closing neck.

7. The mixing unit (2; 202) according to claim 6, **characterized in that**:
- the mixing unit comprises an outlet chamber (78), or an outlet housing (278), which extends along the closing axis (X60; X260) from the closing neck (68; 268) to an axial outlet (80; 280) of the mixing unit, and
- the outlet chamber or the outlet housing comprises at least one radial outlet (82; 282), which is arranged radially relative to the closing axis (X60; X260), the radial outlet preferably extending from the closing neck.

8. The mixing unit (2) according to claim 7, **characterized in that** the mixing unit comprises:
- the outlet chamber (78),
- a first inlet pipe (8), which extends the first inlet (48), and
- a second inlet pipe (14), which extends the second inlet (50), the outlet chamber being arranged between the first inlet pipe and the second inlet pipe.

9. The mixing unit (2) according to any one of the preceding claims, **characterized in that** the mixing unit comprises:
- a cartridge (5), which includes the mixing means (34) and which comprises a lower side (32), passed through by the first inlet (48), by the second inlet (50) and by the main outlet (52), and
- an additional casing (6), which contains the heat-sensitive actuator (70), as well as the shutter (72, 73), and which comprises an upper side (22) by means of which the additional casing is attached against the lower side of the cartridge.

10. The mixing unit (2; 202) according to any one of the preceding claims, **characterized in that** the heat-sensitive actuator is a thermostatic element (70; 270), **in that** the first part comprises a cup (74) containing a thermodilatable body, and **in that** the second part (76; 276) is a piston sliding relative to the first part (72; 272) along the closing axis (X60; X260).

11. The mixing unit (2) according to any one of claims 1 to 9, **characterized in that**:
- the heat-sensitive actuator (470) is made, at least in part, from shape memory alloy, so as to be thermodilatable along the closing axis (X60),
- the second part (476) of the heat-sensitive actuator is heat-sensitive and forms a single-piece part with the first part (472), and
- the translation of the second part relative to the first part is obtained by reversible deformation of the heat-sensitive actuator.

12. The mixing unit (2) according to any one of the preceding claims, **characterized in that** the mixing unit has a cylindrical general shape defining a main axis (X4) of the mixing unit, the closing axis (X60) extending either in a plane substantially orthogonal to the axis (X4), or parallel to the axis (X4).

13. A mixer tap (1) comprising a mixing unit (2; 202) according to any one of the preceding claims.
